# EUROPEAN PATENT APPLICATION

(11) **EP 1 842 432 A1**
(43) Date of publication of application: **10.10.2007**
(21) Application number: 07251544.8
(22) Date of filing: 10.04.2007
(51) Int. Cl.: A23G 3/00, A23G 3/54, A23G 1/54

(54) **Decorative confectionery and method for producing the same**

(30) Priority: 07.04.2006 JP 2006106114; 02.02.2007 JP 2007024184
(71) Applicant: AKUTAGAWA CONFECTIONERY CO., LTD., Tokyo 170-0003 (JP)
(72) Inventor: Akutagawa, Tokuji, Tokyo 170-0003 (JP)
(74) Representative: Caldwell, Judith Margaret

(57) **Abstract**

A decorative confectionery product is provided by forming an aqueous edible coating layer (2) on the top an edible base material (1) having an oil-containing surface, and subsequent forming of an image (3) through printing on the coating layer (2). The edible base material may be chocolate, the coating layer (2) may be formed through silk screen printing, and printing may be ink-jet printing. By use of the present invention, clear images can be formed on the top surface of a confectionery product which contains an oil-containing edible base material, because aqueous edible ink is employed.

## Description

The present invention relates to a confectionery product whose decorativeness is enhanced by printing an image, e.g., patterns, characters, or photo-images, on a confectionery base material, in particular, on chocolate or a chocolate-based confectionery product by use of an edible ink; and to a method for producing such a decorative confectionery product.

Conventionally, attempts have been made to print images (e.g., patterns, characters, or photo-images) on the surface of confectionery base materials (e.g., *senbei* (Japanese rice cookies), *monaka* (bean-based sweetened ingredients encapsulated in a thin shell), cakes, biscuits, cookies, and chocolates) for producing high-value-added products. Printing on such a confectionery base material can be performed through a technique such as ink-jet printing, screen printing, or pad printing. Of these printing techniques, ink-jet printing enables an image to be printed on even a soft object or an object having an irregular surface, and therefore is widely applicable as compared with the other printing techniques. In addition, ink-jet printing can achieve high-speed printing and give a clearer print image. Ink-jet printing is classified into continuous printing and on-demand printing. In the continuous method, ink is discharged through a small orifice in the form of microdroplets, and, while the direction of discharge is controlled by an image signal, the microdroplets are deposited onto an object for printing the image thereon (hereinafter such an object may be referred to a "printing target"). In the on-demand method, ink droplets are generated and discharged only when image data are present. The latter method is beneficial because configuration and control can be made simple.

Known decorative confectionery production methods include, for example, a method disclosed in JP-2001-161285-A. In the disclosed method, an image (e.g., a photo-image) is printed on an edible film by use of an edible ink; the image-printed edible film is spread over the surface of, for example, a cake base material; and subsequently a transparent edible coating material is applied onto the image-printed surface of the edible film for providing the image-printed surface with an attractive gloss. The printing may be performed through a technique such as ink-jet printing, screen printing, or offset printing, and as an edible film there may be employed a film formed mainly from starch powder, a film formed mainly from konjak (alimentary yam) powder, or a film formed from a mixture containing either of these powders and an appropriate amount of cellulose, glycerin, locust bean gum, titanium dioxide, citric acid, trehalose, or liquid D-sorbitol. As an edible coating material, for example, gel-like pectin called "nappage" may be used.

Such a conventional image-printed decorative confectionery production method has faced a difficulty in that when a generally employed edible ink, which is aqueous, is applied to a base material (i.e., a printing target) having a surface in which a certain amount of oil is present (hereinafter such a surface may be referred to as an "oil-containing surface"), the aqueous edible ink exhibits no affinity to the printing target, and thus a clear image cannot be formed. Particularly when such a method employs ink-jet printing, aqueous ink droplets are repelled by the oil-containing surface of the base material, resulting in failure in forming a clear image. If available, an edible oil-based ink for ink-jet printing could be employed. However, due to technical problems such an ink has not yet been developed. Therefore, decorative confectionery products have been produced through a method as disclosed in JP-2001-161285-A, in which an image is printed on an edible film by means of ink-jet printing, and the image-printed edible film is attached to a confectionery base material. Unfortunately, the process of this method is complicated as compared with a process where an image is printed directly on the surface of a confectionery base material, and thus the method requires higher cost and a longer period of time.

In order to solve the aforementioned problems involved in the existing techniques, it is an object of the present invention to provide a decorative confectionery product having, on its surface, a clear image which, even when an edible base material having an oil-containing surface is employed, can be formed by use of an aqueous edible ink; and a method for producing the decorative confectionery product.

According to the present invention, there is provided a decorative confectionery product comprising an edible base material having an oil-containing surface, an aqueous edible coating layer formed on the surface of the base material, and an image layer provided on the edible coating layer through printing by use of an aqueous edible ink. The image layer may be provided through a printing technique such as ink-jet printing, screen printing, or pad printing. According to the present invention, even when an oil-based edible base material is employed, since an aqueous edible coating layer is formed on the edible base material, a clear image can be printed by use of an aqueous edible ink.

In the present invention, the edible coating layer contains a powdery base selected from the group consisting of lactose, starch, calcium powder, and mixtures thereof, and a binder selected from the group consisting of powdered sugar, starch syrup, gelatin, and mixtures thereof, the powdery base and the binder being dissolved in a predetermined amount of water upon use. The edible coating layer, which is aqueous, exhibits affinity to an aqueous edible ink, and thus enables a clear image to be printed thereon.

In the present invention, the edible coating layer may optionally contain titanium dioxide, which serves as a whitening agent. When such a whitening agent is employed, the resultant edible coating layer has a white color, and thus an image of good contrast can be printed on the edible coating layer. In contrast, when such a whitening agent is not employed, the edible coating layer will not have a white color, and the color of the base material is seen through the edible coating layer.

In the present invention, in order to obtain a desired surface suitable for receiving printed decoration, the edible coating layer may contain an emulsifier for conditioning the surface (specifically, an unprinted portion or portions). The emulsifier is effective in that, the powdery base, the binder, and the whitening agent, which are dissolved in water, can be well dispersed and mixed together, to give a uniform solution. If an emulsifier is not employed, a relatively rough surface will result.

In the present invention, an image may be printed on the edible coating layer through ink-jet printing. Even when ink-jet printing is performed by use of an aqueous edible ink, since the aqueous edible coating layer is formed on the oil-containing surface of the base material, microdroplets ejected from a nozzle are deposited onto the edible coating layer without being repelled by the layer, whereby a clear image can be printed on the layer. The present invention may employ a printing technique other than ink-jet printing, such as screen printing or pad printing.

In the present invention, the edible base material is preferably chocolate or a chocolate-based confectionery product. Examples of chocolate materials employed in the present invention include dark chocolate, milk chocolate, and white chocolate. When chocolate, which is a typical oil-based confectionery material, is in the form of a plate, the plate-like chocolate material has a flat surface, and thus an image is readily printed thereon. Meanwhile, even in the case where a chocolate material having a curved surface is employed, an aqueous edible coating layer is formed thereon through pad printing, and then an image can be printed on the thus-formed layer through ink-jet printing. A decorative confectionery product according to the present invention, in which a clear image is printed on a surface having a chocolate color, exhibits enhanced design value, and thus can encourage consumers to buy the product, which will lead to an increase in sales.

The aforementioned decorative confectionery product of the present invention is produced through forming an aqueous edible coating layer on an oil-containing surface of an edible base material; and printing an image on the edible coating layer by use of an aqueous edible ink. According to one embodiment of the present invention, an edible coating layer is formed, through application or printing of an aqueous edible coating solution, on the top surface of a lower mold half of a mold unit for producing chocolate, the mold unit including lower and upper mold halves; a molten chocolate material is poured into a cavity formed by mounting the upper mold half, which has a hole for defining a cavity, on the lower mold half so that the edible coating layer is bonded to the chocolate material, followed by cooling, to thereby form a chocolate piece; and an image is printed on the edible coating layer of the chocolate piece through ink-jet printing by use of an aqueous edible ink. According to another embodiment of the present invention, a chocolate piece is formed by charging a chocolate material into a mold unit, followed by cooling; an edible coating layer is formed on the top surface of the thus-formed chocolate piece through application or printing of an aqueous edible coating solution; and an image is printed on the edible coating layer through ink-jet printing by use of an aqueous edible ink. A chocolate-based confectionery product having a clear image printed on its surface can be produced through any of these production methods.

The decorative confectionery product of the present invention includes an edible base material having an oil-containing surface; an aqueous edible coating layer formed on the surface of the base material; and an image layer provided on the edible coating layer through printing by use of an aqueous edible ink. According to the present invention, since an aqueous edible coating layer is formed on an oil-containing surface of an edible base material, a clear image can be printed by use of an aqueous edible ink.

Various other objects, features, and many of the attendant advantages of the present invention will be readily appreciated as the same becomes better understood with reference to the following detailed description of the preferred embodiments when considered in connection with the accompanying drawings, in which:
Fig. 1 is a perspective view showing a chocolate piece according to an embodiment of the present invention, the chocolate piece including a chocolate material and an edible coating layer formed thereon;
Fig. 2 is a perspective view showing a chocolate-based confectionery product according to the above embodiment of the present invention, wherein an image is printed on the edible coating layer;
Figs. 3A to 3E are explanatory views schematically showing a method of the present invention for producing a chocolate-based confectionery product;
Figs. 4A and 4B are explanatory views partially showing another method of the present invention for producing a chocolate-based confectionery product;
Figs. 5A to 5D are explanatory views schematically showing yet another method of the present invention for producing a chocolate-based confectionery product; and
Figs. 6A to 6D are explanatory views showing yet another method of the present invention for producing a chocolate-based confectionery product.

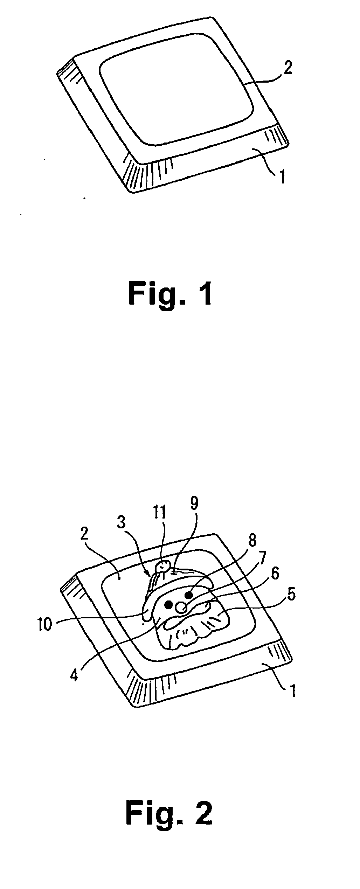

Embodiments of the present invention will next be described with reference to the drawings. Fig. 1 shows a rectangular plate-like chocolate piece according to an embodiment of the present invention. An edible base material 1 is formed of chocolate, and an edible coating layer 2 is formed thereon in a rectangular region which accounts for about 60% to about 90% of the entire top surface. The size, shape, and position of the coating region may be arbitrarily selected. The shape of the coating region is not necessarily limited to a rectangular shape, and may be, for example, circular or elliptical. The edible coating layer 2 is formed from materials, including a powdery base selected from the group consisting of lactose, starch, calcium powder, and mixtures thereof; a binder selected from the group consisting of powdered sugar, starch syrup, gelatin, and mixtures thereof; and optionally a whitening agent (i.e., titanium dioxide). These materials are dissolved in water upon use. Compositional proportions of these materials are: about 50 to about 90 wt% or about 60 to about 90 wt%, preferably about 70 wt% or about 75 wt% of powdery base; about 10 to about 40 wt% or about 10 to about 30 wt%, preferably about 20 wt% or about 30 wt% of binder; and about 1 to about 10 wt% or about 1 to about 5 wt%, preferably about 2 to about 4 wt% or about 3 wt% of titanium dioxide. Examples of calcium powder which may be employed include precipitated calcium carbonate powder, powdered egg shell, powdered seashell, and powdered crustacean shell. Lecithin serving as an emulsifier may be added for improving mixing of these materials in water. The amount of lecithin added is about 0.5 to about 5.0 wt% or about 1.0 to about 5.0 wt%, preferably about 1.0 wt% or about 3.0 wt%. The amount of water employed is determined to be an appropriate level, since an excessively large water amount results in insufficient viscosity, whereas an excessively small water amount results in excessively high viscosity, leading to unsuccessful layer formation through printing or application. The thickness of the edible coating layer 2, which is formed through printing or application, is about 0.05 mm to about 0.2 mm, preferably about 0.1 mm (100 µm), since an excessively large thickness causes poor appearance of the layer, and reduces unity of the layer with the base material.

Fig. 2 shows the state where an image 3 is printed, through ink-jet printing, on the edible coating layer 2 formed on the top surface of the edible base material 1. The image is printed on the top surface of the edible coating layer. The image 3 shown in Fig. 2 represents a Santa Claus face printed on the white edible coating layer 2, which includes a skin-color face 4, a white beard 5, a white mustache 6, a red nose 7, black eyes 8, a red cap 9, a white brim 10, and a white tassel 11 provided on the top of the cap 9. The white parts may be printed with a white color tone different from that of the coating layer, or may be defined by merely a contour with using the white color tone of the coating layer.

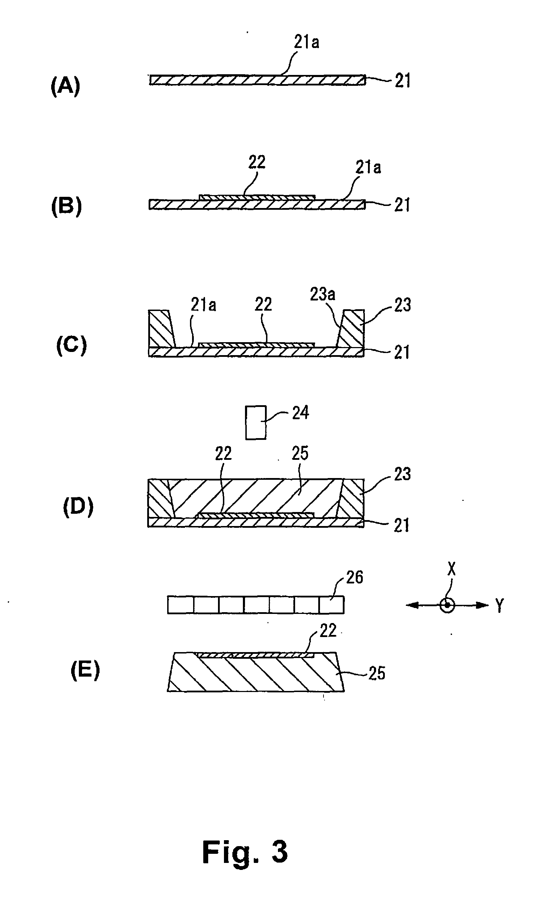

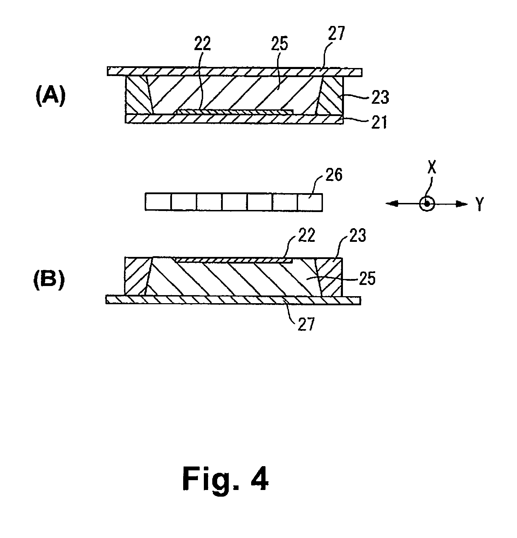

Next will be described, with reference to Figs. 3A to 3E, a method for producing such a decorative confectionery product by taking, as an example, production of a chocolate product. Firstly, as shown in Fig. 3A, a plate-like lower mold half 21 formed of polycarbonate and having a flat top surface 21a is heated to and maintained at a temperature corresponding to the tempering temperature of a chocolate material employed. As shown in Fig. 3B, a solution prepared by dissolving materials constituting an edible coating layer 22 in a predetermined amount of water is subjected to vacuum defoaming, and the resultant solution is applied to the top surface 21a of the lower mold half 21 through spraying or airbrushing, followed by evaporation of water through drying. The edible coating layer 22 may be formed through roller coating, or a printing technique such as ink-jet printing or silk screen printing. Subsequently, as shown in Fig. 3C, an upper mold half 23 having a hole for defining a cavity 23a is mounted on the lower mold half 21, to thereby define the cavity 23a by the upper mold half 23 and the lower mold half 21. As shown in Fig. 3D, a tempered molten chocolate material is poured through a nozzle 24 into the cavity 23a, to thereby form a chocolate piece 25. Through this step, the edible coating layer 22 is bonded to the thus-formed chocolate piece 25. Thereafter, the mold unit is cooled by causing it to pass slowly through a cooling tunnel, and subsequently the chocolate piece 25 is demolded by separating the upper and lower mold halves from each other. As shown in Fig. 3E, a printer head 26 of an ink-jet printer is brought closer to the edible coating layer 22 of the chocolate piece 25, to thereby print an arbitrary image on the layer 22. In another method, after completion of the step shown in Fig. 3D, as shown in Fig. 4A, a support plate 27 is mounted so as to cover the entire top surface of the upper mold half 23, and the resultant mold unit is inverted, followed by removal of the lower mold half 21. Thus, as shown in Fig. 4B, the upper mold half 23, which accommodates the chocolate piece 25, is supported on the support plate 27. Subsequently, an image is printed, by means of the printer head 26, on the edible coating layer 22 of the chocolate piece 25, with the upper mold half 23 being supported on the support plate 27.

The printer head 26 includes seven cartridges which respectively contain seven aqueous edible inks of cyan, magenta, yellow, black, light magenta, light cyan, and gray. In response to an image signal output from a personal computer, edible inks of selected colors are sprayed through spray nozzles of the corresponding cartridges toward the surface of the edible coating layer 22 so that the inks are applied merely onto the sites where image data are present. In this case, each chocolate piece 25, which is positioned and orderly arranged by means of a tray or a jig, is conveyed in an X direction; i.e., a direction perpendicular to the sheet surface of Figs. 3A to 3E (or Figs. 4A and 4B), and the printer head 26 is reciprocated in response to image signals in a Y direction; i.e., a horizontal direction as viewed in the sheet of Figs. 3A to 3E (or Figs. 4A and 4B). In order to achieve a predetermined color through printing, inks of predetermined colors are discharged from the corresponding cartridges of the printer head 26, and are simultaneously applied onto the layer. Thus, as shown in Fig. 2, a color image is printed on the edible coating layer 22 of the flat chocolate piece 25. For the case of practical production of chocolate products, automated mechanical equipment is employed, and a plurality of cavities are defined in a mold unit including an upper mold half and a lower mold half, so that a plurality of products are produced through a single production process. Image positioning is performed through a method in which a computer image of chocolate piece layout is printed in advance on a paper sheet through ink-jet printing, and mold cavities are formed on the basis of the image of chocolate piece layout printed on the paper sheet; or a method in which a computer image of chocolate piece layout is determined on the basis of the layout of the cavities of a mold unit employed.

Thus, the aforementioned production method includes the steps of forming, through application or printing of an aqueous edible coating solution, the edible coating layer 22 on the top surface 21a of the lower mold half 21; pouring a molten chocolate material into the cavity 23a formed by mounting the upper mold half 23, which has a hole for defining the cavity 23a, on the top surface 21a of the lower mold half 21 so that the edible coating layer is bonded to the chocolate material, followed by cooling, to thereby form the chocolate piece 25; and printing an image on the edible coating layer 22 of the chocolate piece 25 by discharging an aqueous edible ink from the printer head 26 of an ink-jet printer. Therefore, since the aqueous edible coating layer 22 is formed on the chocolate piece, which has an oil-containing surface, a clear image can be printed by use of an aqueous edible ink.

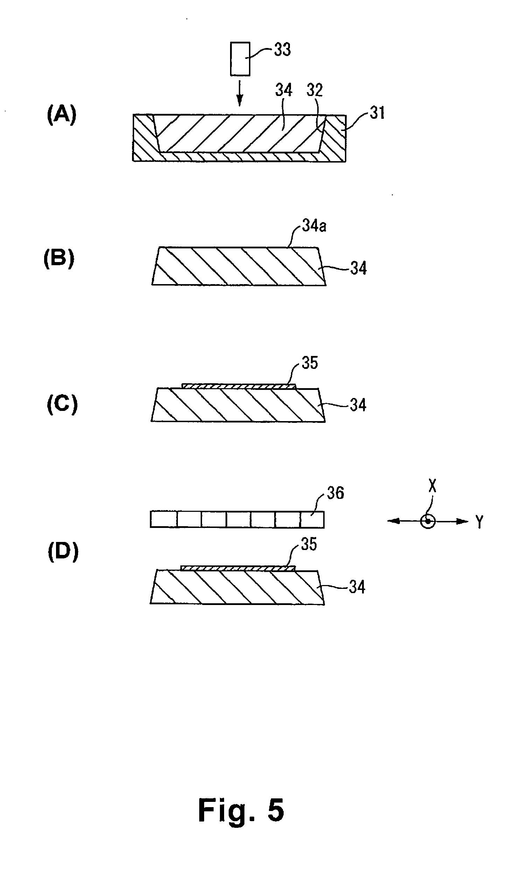

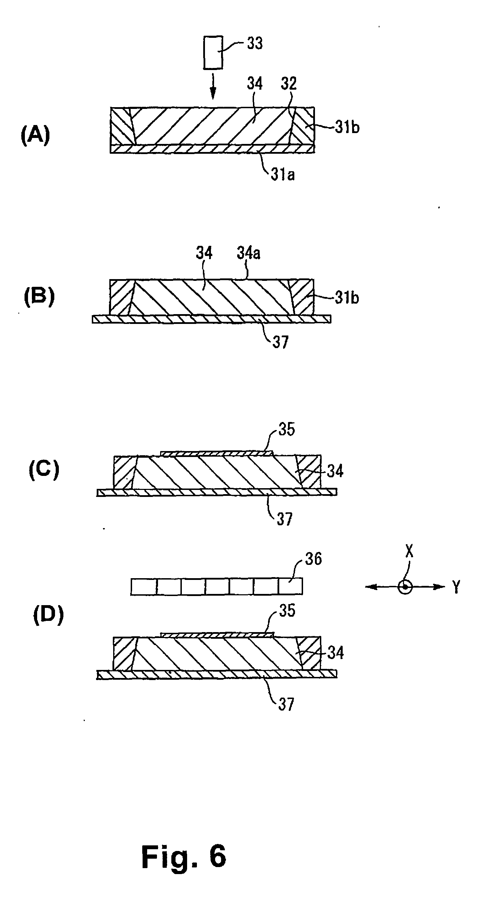

Figs. 5A to 5D show another method for producing a decorative confectionery product according to the present invention. In the case of the production method shown in Figs. 3A to 3E, when a chocolate piece 25 having a relatively large area is formed through cooling in the step shown in Fig. 3D, due to a difference in percent shrinkage between a chocolate material and an edible coating layer 22, the thus-formed chocolate piece may be warped, or the edible coating layer 22 may be exfoliated from the chocolate piece. Therefore, the method shown in Figs. 3A to 3E is suitable for forming a chocolate piece having a relatively small area, whereas the below-described method is suitable for forming a chocolate piece having a relatively large area. Firstly, as shown in Fig. 5A, a mold unit 31 formed of polycarbonate is heated to and maintained at a temperature corresponding to the tempering temperature of a chocolate material employed, and a tempered molten chocolate material is poured through a nozzle 33 into a cavity 32 of the mold unit 31. Subsequently, the mold unit is cooled by causing it to pass slowly through a cooling tunnel, to thereby form a chocolate piece 34. Subsequently, as shown in Fig. 5B, the thus-formed chocolate piece 34 is demolded, and placed at a predetermined position so that a surface to become a top surface 34a faces upward. Subsequently, as shown in Fig. 5C, a solution prepared by dissolving materials constituting an edible coating layer 35 in a predetermined amount of water is subjected to vacuum defoaming, and the resultant solution is applied to the top surface 34a through spraying or airbrushing, followed by evaporation of water through drying. Subsequently, as shown in Fig. 5D, a printer head 36 of an ink-jet printer is brought closer to the edible coating layer 35 of the chocolate piece 34, to thereby print an arbitrary image on the layer 35. In another method, as shown in Fig. 6A, firstly, an upper mold half 31b having a cavity 32 is mounted on a lower mold half 31a, and a chocolate material is poured through a nozzle 33 into the cavity 32, to thereby form a chocolate piece 34. Thereafter, a support plate 37 is mounted so as to cover the entire top surface of the upper mold half 31b, and the resultant mold unit is inverted, followed by removal of the lower mold half 31a. Thus, as shown in Fig. 6B, the upper mold half 31b, which accommodates the chocolate piece 34, is supported on the support plate 37. Subsequently, as shown in Fig. 6C, an edible coating layer 35 is formed on the surface 34a of the chocolate piece 34, with the upper mold half 31b being supported on the support plate 37. Subsequently, as shown in Fig. 6D, an image is printed on the edible coating layer 35 by means of a printer head 36 of an ink-jet printer. The edible coating layer 35 may be formed through roller coating, or a printing technique such as ink-jet printing or silk screen printing. The printer head 36 includes seven cartridges which respectively contain seven aqueous edible inks of cyan, magenta, yellow, black, light magenta, light cyan, and gray. In response to an image signal output from a personal computer, edible inks of selected colors are sprayed through spray nozzles of the corresponding cartridges toward the surface of the edible coating layer so that the inks are applied merely onto the sites where image data are present. Ink-jet printing and practical chocolate production are performed in a manner similar to that described above.

Thus, the aforementioned production method includes the steps of forming the chocolate piece 34 by pouring a chocolate material into the mold unit 31 or the mold halves 31a and 31b, followed by cooling; forming the edible coating layer 35 on the top surface 34a of the thus-formed chocolate piece 34 through application or printing of an aqueous edible coating solution; and printing an image on the edible coating layer 35 through ink-jet printing by use of an aqueous edible ink. Therefore, since the aqueous edible coating layer 35 is formed on the chocolate piece, which has an oil-containing surface, a clear image can be printed by use of an aqueous edible ink.

In the above-described embodiments, chocolate is employed as an edible base material. However, the edible base material may be a material having an oil-containing surface, such as, *senbei, monaka,* cakes, biscuits, or cookies. In the above-described embodiments, an image is printed through ink-jet printing. However, when a base material having a relatively hard surface is employed, screen printing, pad printing, or a similar printing technique may be employed.

### Example 1

A chocolate-based confectionery product was produced through the method shown in Figs. 3A to 3E. 30 cc of water (purified water) was mixed with 74 wt% of lactose, 20 wt% of powdered sugar, 3 wt% of titanium dioxide, and 3 wt% of lecithin, to thereby prepare a solution for forming an edible coating layer. The thus-prepared solution was applied through silk screen printing, followed by evaporation of water through drying, to thereby form a white edible coating layer. Through on-demand ink-jet printing by use of an aqueous edible ink, an image was printed on the surface of a chocolate piece on which the edible coating layer had been formed. The thus-printed image was clear, and exhibited a good contrast against the white coating layer.

### Example 2

A chocolate-based confectionery product was produced through the method shown in Figs. 3A to 3E. 20 cc of water (purified water) was mixed with 10 wt% of lactose, 30 wt% of powdered sugar, 55 wt% of calcium powder, 4 wt% of titanium dioxide, and 1 wt% of lecithin, to thereby prepare a solution for forming an edible coating layer. The thus-prepared solution was subjected to vacuum defoaming, and then was applied through silk screen printing, followed by evaporation of water through drying, to thereby form a white edible coating layer. Through on-demand ink-jet printing by use of an aqueous edible ink, an image was printed on the surface of a chocolate piece on which the edible coating layer had been formed. The thus-printed image was clear, and exhibited a good contrast against the white coating layer.

### Example 3

An edible coating layer was formed from a solution having the same composition as the solution employed in Example 1, except that titanium dioxide is not contained. The thus-formed edible coating layer was semitransparent. Through on-demand ink-jet printing by use of an aqueous edible ink, an image was printed on the surface of a chocolate piece on which the edible coating layer had been formed. The thus-printed image was clear, though the color of the base material was seen through the edible coating layer. The printed image exhibited a darker and duller color tone, and a poorer contrast, compared with the case of printing on a white coating layer.

### Example 4

A chocolate-based confectionery product was produced through the method shown in Figs. 5A to 5D. A chocolate material was poured into a cavity of a mold unit, followed by cooling, to thereby form a chocolate piece. 20 cc of water (purified water) was mixed with 10 wt% of lactose, 30 wt% of powdered sugar, 55 wt% of calcium powder, 4 wt% of titanium dioxide, and 1 wt% of lecithin, to thereby prepare a solution for forming an edible coating layer. The thus-prepared solution was subjected to vacuum defoaming, and then was applied onto the chocolate piece through silk screen printing, followed by evaporation of water through drying, to thereby form a white edible coating layer. An image was printed on the surface of the edible coating layer through on-demand ink-jet printing by use of an aqueous edible ink. The thus-printed image was clear, and exhibited a good contrast against the white coating layer.

As described above, the decorative confectionery production method of the present invention includes forming an aqueous edible coating layer on an oil-containing surface of an edible base material, and printing a clear image on the edible coating layer by use of an aqueous edible ink. According to the present invention, high-value-added confectionery products can be produced from confectionery base materials such as *senbei, monaka,* cakes, biscuits, cookies, and chocolates. Particularly, the present invention is useful for application to chocolate and a chocolate-based confectionery product.

## Claims

1. A decorative confectionery product comprising an edible base material having an oil-containing surface, an aqueous edible coating layer formed on a surface of the base material, and an image layer provided on the edible coating layer through printing by use of an aqueous edible ink.

2. The decorative confectionery product according to claim 1, wherein the edible coating layer contains a powdery base selected from the group consisting of lactose, starch, calcium powder, and mixtures thereof, and a binder selected from the group consisting of powdered sugar, starch syrup, gelatin, and mixture thereof.

3. The decorative confectionery product according to claim 2, wherein the edible coating layer contains titanium dioxide as a whitening agent.

4. The decorative confectionery product according to claim 2 or 3, wherein the edible coating layer contains an emulsifier.

5. The decorative confectionery product according to any one of claims 1 to 4, wherein the image is printed on the edible coating layer through ink-jet printing.

6. The decorative confectionery product according to any one of claims 1 to 5, wherein the edible base material is chocolate or a chocolate-based confectionery product.

7. A process for producing a decorative confectionery product, comprising the steps of forming an aqueous edible coating layer on an oil-containing surface of an edible base material; and printing an image on the edible coating layer by use of an aqueous edible ink.

8. The process according to claim 7, wherein said step of forming an aqueous edible coating layer comprises applying or printing an aqueous solution prepared by dissolving in water a powdery base selected from the group consisting of lactose, starch, calcium powder, and mixtures thereof, and a binder selected from the group consisting of powdered sugar, starch syrup, gelatin, and mixtures thereof; and evaporating water.

9. The process according to claim 8, wherein said solution contains titanium dioxide as a whitening agent.

10. The process according to claim 8 or 9, wherein said solution contains an emulsifier.

11. The process according to any one of claims 7 to 10, wherein said printing step is performed through ink-jet printing.

12. The process according to any one of claims 7 to 11, wherein the edible base material is chocolate or a chocolate-based confectionery product.

13. A process for producing chocolate or a chocolate-based confectionery product, comprising the steps of:
forming an edible coating layer, through application or printing of an aqueous edible coating solution, on a top surface of a lower mold half,
pouring a molten chocolate material into a cavity formed by mounting an upper mold half, which has a hole for defining a cavity, on the lower mold half so that the edible coating layer is bonded to the chocolate material, followed by cooling, to thereby form a chocolate piece; and
printing an image on the edible coating layer of the chocolate piece through ink-jet printing by use of an aqueous edible ink.

14. A process for producing chocolate or a chocolate-based confectionery product, comprising:
pouring a chocolate material into a mold unit, followed by cooling to thereby form a chocolate piece;
forming an edible coating layer on the top surface of the formed chocolate piece through application or printing of an aqueous edible coating solution; and
printing an image on the edible coating layer through ink-jet printing by use of an aqueous edible ink.
